# EUROPEAN PATENT SPECIFICATION

(11) **EP 2 874 492 B1**
(45) Date of publication and mention of the grant of the patent: **11.09.2019**
(21) Application number: 13765406.7
(22) Date of filing: 18.07.2013
(51) Int. Cl.: A01K 5/01, B65D 1/30

(54) **DEVICE FOR DISPENSING FOODS**
VORRICHTUNG ZUR AUSGABE VON NAHRUNGSMITTELN
DISPOSITIF PERMETTANT DE DISTRIBUER DES PRODUITS ALIMENTAIRES

(30) Priority: 18.07.2012 IT MO20120185
(43) Date of publication of application: 27.05.2015
(73) Proprietor: Damco S.r.l., 42012 Campagnola Emilia (RE) (IT)
(72) Inventor: FANTUZZI, Davide, 42012 Campagnola Emilia (RE) (IT)
(74) Representative: Luppi, Emanuele
(86) International application number: PCT/IB2013/001558
(87) International publication number: WO 2014/013319

(56) References cited:
- EP-A1- 1 481 904
- EP-A2- 1 093 719
- FR-A1- 2 701 353
- FR-A1- 2 917 719
- US-A1- 2003 178 339

## Description

### Technical Field

The present invention relates to a food pack which comprises single-dose trays and to a device for the programmed dispensing of trays.

### Background Art

Pet owners have the concern of also feeding their pets when they are away from home and have not taken their pets with them.

In these cases, owners often turn to neighbours to prepare the food portions and to feed these to the animals left at home.

Such solution is not always practical, for example because the neighbours are not available.

Furthermore, pet owners are sometimes reluctant to allow strangers and persons who are not part of the family to have free access to their homes.

To overcome these drawbacks, automatic apparatuses are available on the market for the timed distribution of food.

One of these apparatuses is described in the Italian patent no. 1380394.

Such apparatus comprises a container split up into concave compartments, shaped in segments, to receive portions of granular foods for animals, the bottom of which comprises a portion which is gravity-opening downwards.

In correspondence to the bottom of said container, a full-bodied rotating disc is provided wherein is obtained a concave sector suitable for receiving the opening portion of the bottom of the segments.

The rotation of the disc is made according to a predefined program such as to move the aforementioned concave sector from time to time underneath a different segment, and enable it to open, so the respective portion of food falls onto a chute placed underneath the platform.

The chute ends in an unloading extremity where the dispensed portion is collected, such extremity being accessible to the animal.

In practice, the disc rotation means are programmed so as to make one or more rotations a day so as to dispense one or more portions of food a day to the animal.

The described device is particularly designed for dispensing dry granular foods, but its use is not recommended in the case of humid foods, such as meat or pasta, both because the latter would stick to the walls of the segments or the chute, thereby in fact making dispensing inefficient, and because for reasons of adequate preservation and hygiene, it is preferable for humid foods to stay sealed in a container until they are eaten. An apparatus for dispensing a tray containing food is known from FR-A-2 917 719.

### Description of the Invention

An object of the present invention is to upgrade the background art mentioned above within the ambit of a simple, rational, easy and effective to use as well as low cost solution.

The above mentioned object is achieved by a kit according to claim 1.

In practice, the proposed pack identifies a blister of single-dose trays closed by a film defining the lids thereof, and the invention therefore makes available a pack suitable for containing the daily food portions for the pet, able to feed the animal for a pre-established number of days equal to the number of blister trays. Because the food is contained in closed trays, it can also be of the humid type. Therefore, the animal owner needs only choose the number of trays to leave to the animal, according to the number of days he/she is away from home, while the food is already prepared in the suitable portion inside the trays, which frees him/her from having to decide which is the most suitable portion for feeding the animal and preventing it from becoming fat.

In order to be able to distribute the trays according to the ways pre-established by the owner, the invention makes available the above kit.

Because the device envisages, in conformity with the claim 1, automatic opening means which, according to a distribution program, remove the film from the loaded trays, then the owner needs only suitably programme the device so that, on each day of absence, at the time preset for the animal's meal, the device automatically opens one or more trays and distributes them.

Consequently, until the time a given portion of food has to be eaten, the relative tray is not opened, and this makes it possible to also distribute perfectly preserved humid food to the animal on the days the owner is away from home.

### Brief Description of the Drawings

Other characteristics and advantages of the present invention will become more evident from the description of a preferred, but not sole, embodiment of the invention, illustrated purely as an example but not limited to the annexed drawings in which:
- figure 1 is an axonometric view of the pack of the invention;
- figure 2 is the enlarged detail K of figure 1;
- figure 3 is an axonometric view of the device of the invention before being loaded;
- figure 4 is an axonometric view of the device of the previous illustration, while it is loaded with the pack of the invention; and
- figure 5 is an axonometric view of the proposed device, taken from the opposite point of view with respect to figure 3;
- figure 6 is a side vertical section view of the device of figures 3 - 5, before removing the film from the trays of the pack;
- figure 7 is the same view of the previous illustration, in which is shown the moment when the film is removed from a tray; and
- figure 8 is the view of the previous illustration, in which is shown the dispensing of the tray.

### Embodiments of the Invention

With particular reference to such figures, indicated by 1 is the single-dose tray, i.e. the tray which contains a portion of food for the animal.

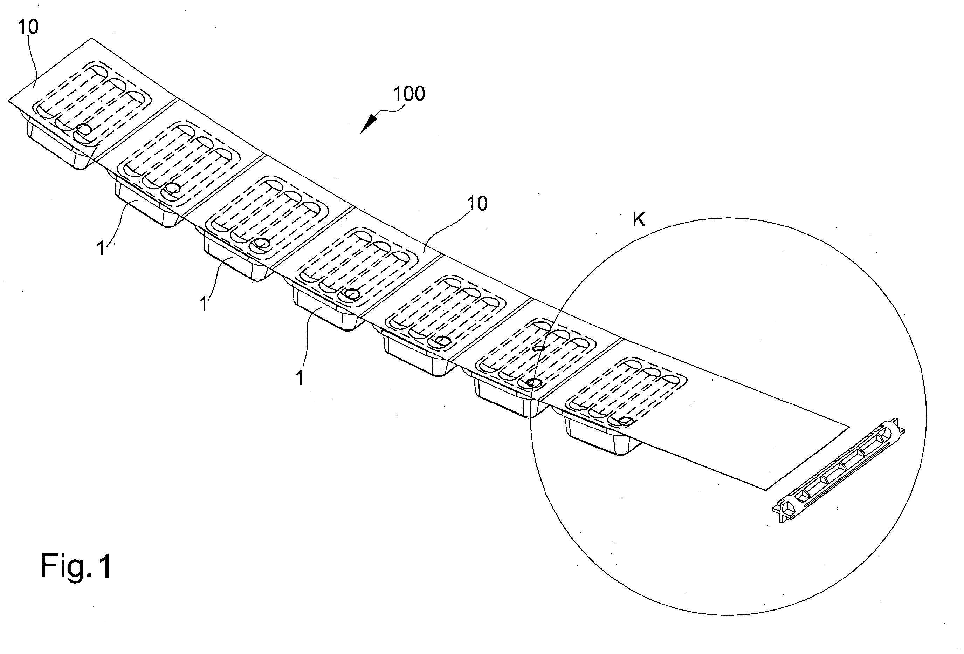

Figure 1 shows the pack 100 of the invention that comprises a plurality of trays 1 and a common film 10 which is attached in a removable way to the trays 1 so as to close each one of them, connecting them the one to the other, to define a blister pack 100.

Clearly, the trays 1 each have an opening providing access to their inner volume wherein the portion is inserted, and the film 10 closes such opening, thus defining a lid for each tray 1, in such a way that the removal of the film from one or more trays 1 opens these, making the portion of food accessible.

The trays 1 and the film 10 are preferably made of non-toxic material, the latter being attached to the former e.g. by means of heat-sealing or other equivalent methods.

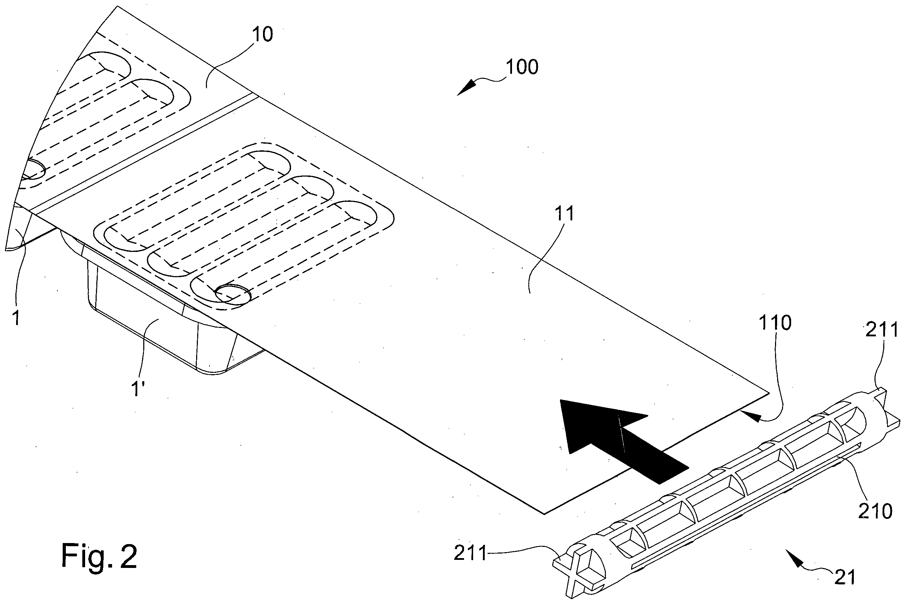

As shown in figure 2, for reasons that will be made clearer later on, it is preferable for the film 10 to have the shape of a strip connecting the trays 1 in series, said strip 10 having at least a free portion 11 ending up into an end edge 110.

In practice, the trays are attached to the strip 10 of film in successive positions of its length, at a suitable distance the one from the other, and upstream of the first tray 1' of the linear succession remains a protruding portion of film 10, overhanging with respect to the first tray 1', which terminates in a preferably transversal edge 110.

The film 10 is clearly flexible and foldable and can therefore be folded in correspondence to its separation sections arranged between two consecutive trays 1, so the blister pack 100 itself can be curved.

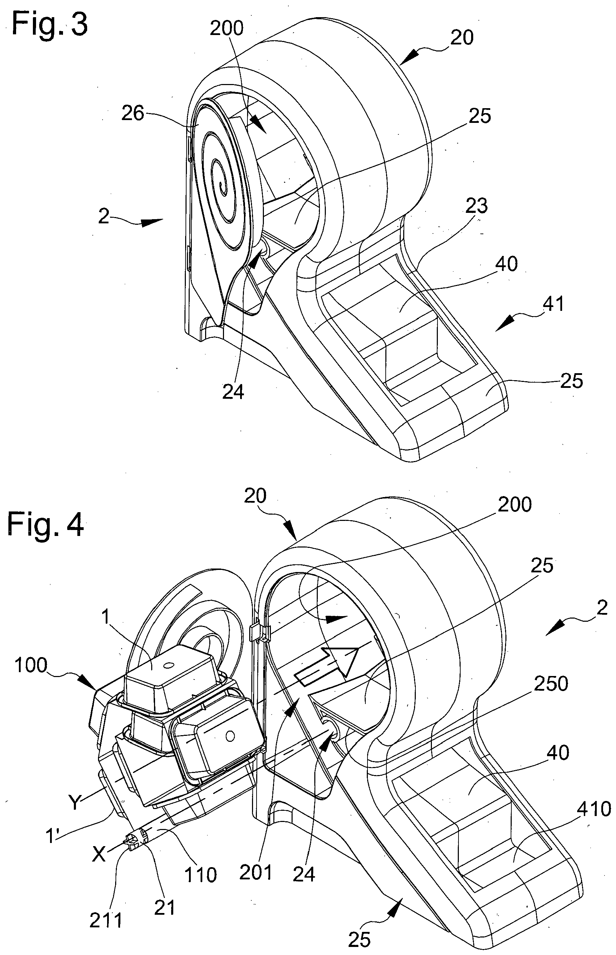

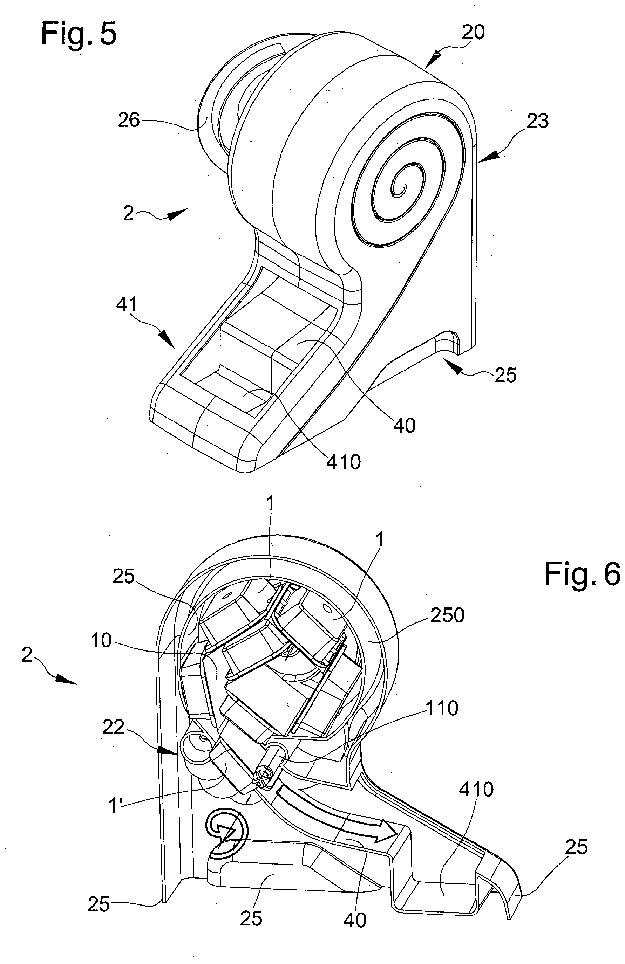

The proposed blister 100 of trays is particularly suitable for being used with the device 2 of the invention, the preferred embodiment of which is shown in the figures 3 - 8.

According to such embodiment, the device 2 comprises a containment and protection casing 23 and includes a magazine 20 for housing a plurality of trays, in particular the proposed blister 100, this magazine having an output passage 201 to allow at least one tray 1 at a time to come out.

Furthermore, the device of the invention comprises automatic opening means 21,22 for removing the film 10 from the trays 1 housed in the magazine 20 according to a dispensing program.

Furthermore, the device 2 has delivery means 40,41,410, which will be described in detail later on, to allow the presentation of the open trays outside the device 2 itself.

In one of its very general versions, the mentioned opening means 21,22 essentially comprise grip means 21 for engaging an edge 110 of the film 10 and timed operating means 22 for mutually moving the grip means 21 and the trays 1, in such a way as to remove a portion of the film 1 of programmed length.

In practice, the essential concept of such general aspect of the invention is that if the edge 110 of the film is engaged by the grip means 21 and these move suitably with respect to the trays to which the film 10 itself is attached, or vice versa, then the film 10 separates from the trays 1.

In particular, this can be implemented in the following way.

First of all, the grip means comprise a grip element 21 which is able to engage the edge 110 of the film, and which is able to rotate around its own rotation axis X, so that the engaged film 10 is pulled and consequently separated from the trays 1.

In this case, the operating means 22 are suitable for placing the grip element 21 in rotation according to a programmed procedure.

Even more in detail, the grip element 21, as is clear from the figure 2, can have a substantially cylindrical shape, with rotation axis X coinciding with its central axis, and be fittable in the device 1 so as to connect with the mentioned operating means 22; in this case, the grip element 21 shapes, in correspondence to its lateral periphery, at least an engagement seat 210 (but preferably a plurality of seats, angularly distanced) for receiving, by interference fit, the edge 110 of the film, so that, upon the rotation of the grip element 21, the removed film winds around its lateral periphery (like a spool).

The operation is described below of the device 2, making reference to the case wherein it is used with the proposed blister 100 of trays.

The pet owner chooses the length of the blister pack 100 (i.e., the number of trays 1 making it up) to be loaded in the device 2, according to the number of days he/she is away from home and according to the eating requirements of his/her animal.

After which, as indicated schematically in the figures 1 and 2, he/she inserts the mentioned free terminal edge 110 of the film 10 in the seat 210 of the grip element 21 (from which it can then be separated).

To improve the film - grip element coupling, the user can wrap the above-mentioned free portion 11 around the lateral periphery of the grip element 21.

At this point, the user introduces the blister 100 into the magazine 20, which internally comprises a housing volume 200 wherein the blister 100 can be contained with possibility of longitudinal sliding (according to procedures better explained later on).

Furthermore, the user introduces the grip element 21 into an assembly seat 24, obtained within the device 2 (see in particular the figures 3 and 4), where the grip element 21 itself can rotate and where it connects up to the operating means 22.

Such assembly seat 24 can have an insertion extremity and an opposite coupling extremity in correspondence to which the coupling is achieved between the grip element 21 and the operating means 22 (in a way described below).

At this point, the user programmes the operating means 22 so they dispense on a daily basis the established number of trays 1 (normally one at a time).

In practice, the operating means can comprise a programmable control unit which includes a timer device, connected to a motor able to place the grip element 21 in rotation.

In a cyclic way, i.e., on each of the days when the pet owner is away, when the established meal time comes around, the operating means trip to place the grip element 21 in rotation by a number of revolutions which depends on the programmed length of the portion of film to be removed.

In practice, the program of the operating means 22 comprises the information of the length of the portion of film 10 which closes a tray 1 and therefore, by turning the grip means 21 by the suitable number of turns, the film is separated from just one tray 1, e.g., so as to open it and then present it outside the device 1, so that the animal can eat.

The operating means 22 are therefore programmable to cyclically command the grip means 21 so they rotate for enough turns to remove the film from what is from time to time the first tray 1' (i.e., that of the succession closest to the engaged edge 110).

Once all the trays have been dispensed, and the pet owner has returned home, then he/she will remove the grip element 21 from the assembly seat 24.

The grip element will have all the blister film wrapped around it and therefore to dispose of the film it will be enough to remove the edge 110 of same from the seat 210 of the grip element 21, so the latter can be used again with another blister.

The assembly seat 24 must therefore be big enough to also accommodate the film wrapped like a spool around the grip element 21.

In order to save space and at the same time permit the efficient operation of the device 2, the latter, in its preferred embodiment envisages that its magazine 20 comprises a curved inner surface which defines the mentioned inner volume 200 which is suitable for containing the blister pack 100 arranged in a coil configuration, wherein the trays can slide along the inner surface 25 itself.

Such inner surface 25 can be defined by an inner wall 250 of the device 2, which is curved around a horizontal axis Y so as to define a curved horizontal surface 25 which the trays housed in the magazine 20 can abut in a sliding way so as to be able to revolve like a coil around said horizontal axis Y during sliding.

As has already been said, the blister 100 can be curved and can therefore be coil folded to be inserted in this configuration in the inner volume 200 of the magazine, which ends up below in the above-mentioned output passage 201.

This aspect is also advantageous from the point of view of operation of the device 2.

In fact, it can be envisaged that the magazine 20 be arranged in an upper part of the device 2, when this is e.g. resting on the ground during use, and that the grip element 21 be arranged downstream of the output passage of the magazine 20, so as to allow, upon the removal of the film of the first tray 1, it to exit from the magazine 20 by gravity and, at the same time, the sliding of the remaining trays of the blister 100, in the direction of the output passage.

In practice, because the trays are joined together in the blister 100 only by the film 10, once this has been removed from a tray 1, the latter will be completely separated from the blister itself and can therefore be advantageously left to fall from the magazine 20, e.g., along a chute 40 (which will be better described below) to then be dispensed.

Furthermore, thanks to the fact that the blister pack 100 is arranged sliding inside the magazine 20, and that the grip element 24 is placed underneath the output passage 201 of the magazine, then the rotation of the grip element 21 drags the blister 100 making it slide longitudinally at each dispensing operation, and causing the forward movement of that which is, from time to time, the first tray 1', so as to arrange it in position for the next dispensing operation.

Consequently, thanks to this advantageous configuration, the cyclic dispensing of the open trays for the animal can be done without the use of active expulsion means.

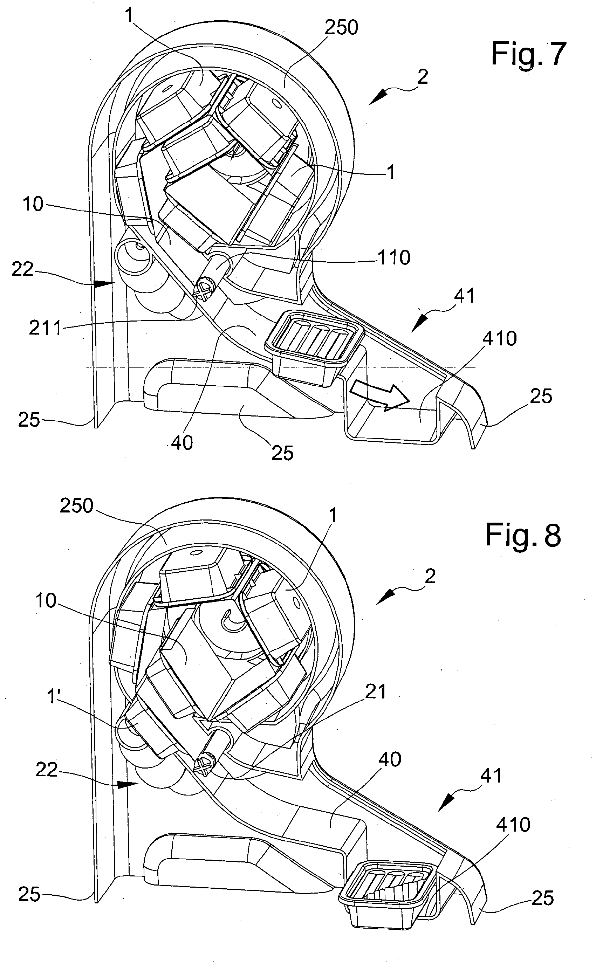

As has in part already been said, the above-mentioned delivery means preferably comprise a chute 40 arranged downstream of the output passage 201 of the magazine 20 (and therefore underneath the magazine) so as to be able to receive the open trays which are from time to time released by the blister 100 and which fall on this (see figure 7).

The chute 40 ends up in a presentation area 41 of the trays, accessible from outside, so the animal can reach the dispensed food (see figure 8).

In detail, the presentation area, as shown in the figures 3 - 8 can comprise a presentation seat 41 suitable for receiving the open trays.

In practice, the side walls of the trays can be converging towards the bottom, so that the tray has a tapered shape towards the bottom, so that, after the animal has eaten each meal and has therefore left empty the tray which contained the food, it can act as a receiving seat for the subsequent dispensed tray, so that, following the various dispensing operations, a stack of empty trays is formed in correspondence to the presentation seat 41, which stack can be easily removed by the device 2 and discarded among the household waste.

The presentation seat 41 will therefore be deep enough to accommodate such stack of empty trays.

The mentioned operating means, besides the control unit and motor, can also comprise a kinematic mechanism (and, e.g., suitable gear motors) to connect the motor and the grip element 21, which kinematic mechanism includes removable coupling means (not shown), to couple the kinematic mechanism itself to the grip element, arranged in correspondence to the above-mentioned coupling extremity of the assembly seat 24 wherein the grip element 21 is inserted.

In practice, it can be envisaged that the mentioned coupling means are a cross groove wherein is inserted a cross male element 211 obtained in correspondence to one or both the extremities of the grip element 21 (see the figure 2 or the figure 4).

According to preferred construction aspects, the casing 23 of the device 2 can comprise a resting base 25 to allow the device 2 to stay still and balanced when placed e.g. on the floor.

Furthermore, as shown in the figures 3 and 4, the casing 23 can comprise a door 26 for accessing the inner volume 200 of the magazine and the assembly seat 24 of the grip element, the latter being covered by and completely included in the casing 23 when the door 26 is closed, so the casing holds the blister pack 100 loaded inside it.

## Claims

1. Kit for dispensing trays (1) containing food portions, closed by means of a removable film (10), **characterized by** the fact that it comprises:
- a food pack (100) comprising a plurality of trays (1) for containing a respective food portion, and a common film (10) attached in a removable way to the trays (1), closing each of them and connecting them to one another so to define a blister pack (100), wherein said common film (10) has the shape of a strip which connects said trays (1) in a series, said strip having at least a free portion (11) ending up into an end edge (110); and
- a device (2) comprising:
- at least a magazine (20) to house said food pack (100), wherein said magazine (20) has an output passage (201) to allow the outflow of at least one tray at a time;
- automatic opening means (21,22) to remove, according to a dispensing program, the common film (10) from the trays (1) housed in the magazine (20), wherein said automatic opening means (21, 22) comprise:
- grip means (21) for engaging said end edge (110) of the common film (10) and comprising at least a grip element (21) able to engage said end edge (110) of the common film, said grip element (21) being configured to rotate around its own rotation axis (X) and to pull and separate the engaged common film (10) from the trays (1); and
- programmable operating means (22) for mutually moving the grip means (21), engaging the end edge (110) of the common film, and the trays (1), said operating means (22) comprising a programmable control unit which includes a timer device, connected to a motor able to place said grip element (21) in rotation;
wherein said dispensing program of the operating means (22) comprises the information of the length of the portion of common film (10) which closes a tray (1) and said programmable operating means (22) are configured to turn said grip means (21) by a number of turns suitable for separating the common film (10) from just one tray (1) and to cyclically command said grip means (21) to rotate for enough turns to remove said film from what is from time to time the first tray closest to said engaged end edge (110); and
- delivery means (40,41,410) to allow the presentation of the open trays outside the device (2).

2. Kit according to the claim 1, wherein the grip element (21) has a substantially cylindrical shape, and wherein said rotation axis (Y) is a central axis thereof, the grip element (21) shaping at the lateral periphery thereof at least an engagement seat (210) for receiving, by interference fit, the end edge (110) of the common film so that, upon the rotation of the grip element (21), the removed common film winds around the lateral periphery thereof.

3. Kit according to one or more of the preceding claims, wherein the operating means (22) are able to cyclically drive in rotation the grip element (21) by a number of revolutions depending on the length of the portion of common film to be removed.

4. Kit according to one or more of the preceding claims, wherein said magazine (20) comprises a curved inner surface (25) defining an inner volume (200) suitable for containing a series of trays (1) arranged in a coil configuration in which they can slide along said inner surface (25), the inner volume ending up below into said output passage.

5. Kit according to one or more of the preceding claims, wherein said grip element is arranged downstream of said output passage of the magazine, so as to allow, upon the removal of the common film from a tray, the exit of the latter by gravity from the magazine, and the sliding of the remaining trays, in the direction of the output passage (201).

6. Kit according to one or more of the preceding claims, wherein said delivery means comprise a chute (40) arranged downstream of the output passage (201) of the magazine (20) and connected to the latter, the chute (40) ending up into a presentation area (41) of the trays, accessible from outside.

## Patentansprüche

1. Kit zur Ausgabe von Schalen (1) mit Lebensmittelportionen, die mittels einer entfernbaren Folie (10) verschlossen sind, **dadurch gekennzeichnet, dass** es umfasst:
- eine Lebensmittelpackung (100), die eine Vielzahl von Schalen (1) zum Aufnehmen einer jeweiligen Lebensmittelportion und eine gemeinsame Folie (10) umfasst, die auf abnehmbare Weise an den Schalen (1) befestigt ist, wobei jede von ihnen geschlossen und miteinander verbunden wird, um eine Blisterpackung (100) zu definieren, wobei die gemeinsame Folie (10) die Form eines Streifens aufweist, der die Schalen (1) in einer Reihe verbindet, wobei der Streifen mindestens einen freien Abschnitt (11) aufweist, der in eine Endkante (110) mündet; und
- eine Vorrichtung (2), die umfasst:
- mindestens ein Magazin (20), um die Lebensmittelpackung (100) aufzunehmen, wobei das Magazin (20) einen Ausgabedurchgang (201) aufweist, um den Abgang mindestens eines Trays gleichzeitig zu ermöglichen;
- automatische Öffnungsmittel (21, 22), um gemäß einem Ausgabeprogramm die gemeinsame Folie (10) von den im Magazin (20) aufgenommenen Schalen (1) zu entfernen, wobei die automatischen Öffnungsmittel (21, 22) umfassen:
- Greifmittel (21) zum Greifen der Endkante (110) der gemeinsamen Folie (10), umfassend mindestens ein Greifelement (21), das in der Lage ist, die Endkante (110) der gemeinsamen Folie zu greifen, wobei das Greifelement (21) konfiguriert ist, sich um seine eigene Drehachse (X) zu drehen und die gegriffene gemeinsame Folie (10) zu ziehen und von den Schalen (1) zu trennen; und
- programmierbare Bedienmittel (22) zum gegenseitigen Bewegen der Greifmittel (21), Greifen der Endkante (110) der gemeinsamen Folie und der Schalen (1), wobei die Bedienmittel (22) eine programmierbare Steuereinheit umfassen, die eine Timervorrichtung beinhaltet, die mit einem Motor verbunden ist, der in der Lage ist, das Greifelement (21) in Drehung zu versetzen;
wobei das Ausgabeprogramm der Bedienmittel (22) die Information über die Länge des Abschnitts der gemeinsamen Folie (10) umfasst, der eine Schale (1) schließt, und die programmierbaren Bedienmittel (22) konfiguriert sind, um die Greifmittel (21) mit einer Anzahl von Umdrehungen zu drehen, die geeignet sind, die gemeinsame Folie (10) von nur einer Schale (1) zu trennen, und um die Greifmittel (21) zyklisch zu veranlassen, sich mit genügend Umdrehungen zu drehen, um die Folie von dem zu entfernen, was von Zeit zu Zeit die erste Schale ist, die der gegriffen Endkante (110) am nächsten ist; und
- Abgabemittel (40, 41, 410), um die Präsentation der offenen Schalen außerhalb der Vorrichtung (2) zu ermöglichen.

2. Kit nach dem Anspruch 1, wobei das Greifelement (21) eine im Wesentlichen zylindrische Form aufweist und wobei die Drehachse (Y) eine Mittelachse davon ist, wobei das Greifelement (21) an dem seitlichen Umfang davon mindestens einen Greifsitz (210) zur Aufnahme der Endkante (110) der gemeinsamen Folie durch Presspassung bildet, so dass sich die entfernte gemeinsame Folie durch die Drehung des Greifelements (21) um den seitlichen Umfang davon wickelt.

3. Kit nach einem oder mehreren der vorstehenden Ansprüche, wobei die Bedienmittel (22) in der Lage sind, das Greifelement (21) zyklisch mit einer Anzahl von Umdrehungen in Drehung zu versetzen, abhängig von der Länge des Abschnitts der zu entfernenden gemeinsamen Folie.

4. Kit nach einem oder mehreren der vorhergehenden Ansprüche, wobei das Magazin (20) eine gekrümmte Innenfläche (25) umfasst, die ein Innenvolumen (200) definiert, das geeignet ist, eine Reihe von Schalen (1) aufzunehmen, die in einer Spulenanordnung angeordnet sind, in der sie entlang der Innenfläche (25) gleiten können, wobei das Innenvolumen unten in den Ausgabedurchgang mündet.

5. Kit nach einem oder mehreren der vorhergehenden Ansprüche, wobei das Greifelement stromabwärts des Ausgabedurchgangs des Magazins angeordnet ist, um durch das Entfernen der gemeinsamen Folie von einer Schale den Austritt der letzteren durch Schwerkraft aus dem Magazin und das Gleiten der verbleibenden Schale in Richtung des Ausgabedurchgangs (201) zu ermöglichen.

6. Kit nach einem oder mehreren der vorhergehenden Ansprüche, wobei die Abgabemittel eine Rutsche (40) umfassen, die stromabwärts des Ausgabedurchgangs (201) des Magazins (20) angeordnet und mit dem letzteren verbunden ist, wobei die Rutsche (40) in einen Präsentationsbereich (41) der Schalen mündet, der von außen zugänglich ist.

## Revendications

1. Kit pour distribuer des plateaux (1) contenant des portions alimentaires, fermés au moyen d'un film amovible (10), **caractérisé par le fait qu'**il comprend :
- un emballage alimentaire (100) comprenant une pluralité de plateaux (1) destinés à contenir une portion alimentaire respective, et un film commun (10) fixé de manière amovible aux plateaux (1), fermant chacun d'entre eux et les raccordant les uns aux autres de façon à définir un emballage-coque (100),
dans lequel ledit film commun (10) a la forme d'une bande qui raccorde lesdits plateaux (1) en une série, ladite bande ayant au moins une portion libre (11) se terminant en un bord d'extrémité (110) ; et
- un dispositif (2) comprenant :
- au moins un caisson (20) pour loger ledit emballage alimentaire (100), dans lequel ledit caisson (20) a un passage de sortie (201) pour permettre la sortie d'au moins un plateau à la fois ;
- des moyens d'ouverture automatiques (21, 22) pour enlever, selon un programme de distribution, le film commun (10) des plateaux (1) logés dans le caisson (20), dans lequel lesdits moyens d'ouverture automatiques (21, 22) comprennent :
- des moyens de préhension (21) pour mettre en prise ledit bord d'extrémité (110) du film commun (10) et comprenant au moins un élément de préhension (21) apte à mettre en prise ledit bord d'extrémité (110) du film commun, ledit élément de préhension (21) étant configuré pour tourner autour de son propre axe de rotation (X) et pour tirer et séparer le film commun (10) mis en prise des plateaux (1) ; et
- des moyens opérationnels programmables (22) pour déplacer mutuellement les moyens de préhension (21), mettant en prise le bord d'extrémité (110) du film commun, et les plateaux (1), lesdits moyens opérationnels (22) comprenant une unité de commande programmable qui inclut un dispositif de chronomètre, raccordé à un moteur apte à placer ledit élément de préhension (21) en rotation ;
dans lequel ledit programme de distribution des moyens opérationnels (22) comprend l'information de la longueur de la portion de film commun (10) qui ferme un plateau (1) et lesdits moyens opérationnels programmables (22) sont configurés pour tourner lesdits moyens de préhension (21) d'un nombre de tours convenant pour séparer le film commun (10) d'un seul plateau (1) et pour donner cycliquement l'ordre auxdits moyens de préhension (21) de tourner pendant suffisamment de tours pour enlever ledit film de ce qui est périodiquement le premier plateau le plus proche dudit bord d'extrémité mis en prise (110) ; et
- des moyens de livraison (40, 41, 410) pour permettre la présentation des plateaux ouverts à l'extérieur du dispositif (2).

2. Kit selon la revendication 1, dans lequel l'élément de préhension (21) a une forme sensiblement cylindrique, et dans lequel ledit axe de rotation (Y) est un axe central de celui-ci, l'élément de préhension (21) conformant au niveau de sa périphérie latérale au moins une assise de mise en prise (210) pour recevoir, par ajustement avec serrage, le bord d'extrémité (110) du film commun de sorte que, lors de la rotation de l'élément de préhension (21), le film commun enlevé s'enroule autour de sa périphérie latérale.

3. Kit selon une ou plusieurs des revendications précédentes, dans lequel les moyens opérationnels (22) sont aptes à entraîner cycliquement en rotation l'élément de préhension (21) d'un nombre de révolutions dépendant de la longueur de la portion de film commun à enlever.

4. Kit selon une ou plusieurs des revendications précédentes, dans lequel ledit caisson (20) comprend une surface interne incurvée (25) définissant un volume interne (200) convenant pour contenir une série de plateaux (1) agencés selon une configuration de bobine dans laquelle ils peuvent coulisser le long de ladite surface interne (25), le volume interne se terminant en dessous dans ledit passage de sortie.

5. Kit selon une ou plusieurs des revendications précédentes, dans lequel ledit élément de préhension est agencé en aval dudit passage de sortie du caisson, de façon à permettre, lors de l'enlèvement du film commun d'un plateau, la sortie de ce dernier par gravité du caisson, et le coulissement des plateaux restants, dans la direction du passage de sortie (201).

6. Kit selon une ou plusieurs des revendications précédentes, dans lequel lesdits moyens de livraison comprennent une goulotte (40) agencée en aval du passage de sortie (201) du caisson (20) et raccordée à ce dernier, la goulotte (40) se terminant dans une zone de présentation (41) des plateaux, accessible depuis l'extérieur.
